# FASCICULE DE BREVET EUROPEEN

(11) **EP 2 732 404 B1**
(45) Date de publication et mention de la délivrance du brevet: **14.06.2017**
(21) Numéro de dépôt: 12744069.1
(22) Date de dépôt: 09.07.2012
(51) Int. Cl.: G06K 19/077, G06F 3/06, G06K 19/07

(54) **MODULE ÉLECTRONIQUE DE STOCKAGE, PROCÉDÉ D'ATTRIBUTION DES CONTACTS D'UN MODULE ÉLECTRONIQUE DE STOCKAGE, PROCÉDÉ DE MISE EN OEUVRE D'UNE ATTRIBUTION**
ELEKTRONISCHES SPEICHERMODUL, VERFAHREN ZUR ZUWEISUNG VON KONTAKTEN DES ELEKTRONISCHEN SPEICHERMODULS UND VERFAHREN ZUR AUSFÜHRUNG DIESER ZUWEISUNG
ELECTRONIC STORAGE MODULE, METHOD FOR ASSIGNING CONTACTS OF AN ELECTRONIC STORAGE MODULE, METHOD FOR IMPLEMENTING AN ASSIGNMENT

(30) Priorité: 12.07.2011 FR 1156335
(43) Date de publication de la demande: 21.05.2014
(73) Titulaire: Orange, 75015 Paris (FR)
(72) Inventeur: COUREAU, Laurent, F-91420 Morangis (FR); PICHELIN, Aude, F-92130 Issy les Moulineaux (FR)
(86) Numéro de dépôt international: PCT/FR2012/051621
(87) Numéro de publication internationale: WO 2013/007942

(56) Documents cités:
- EP-A2- 1 484 708
- WO-A1-02/31761
- WO-A2-99/49415
- DE-A1-102006 053 789
- US-A1- 2010 108 772

## Description

L'invention concerne un module électronique de stockage et un procédé d'attribution des contacts d'un module électronique de stockage. En particulier, l'invention concerne les cartes à puces telles que la carte UICC (Universal Integrated Circuit Card), carte à puce communément utilisée pour l'accès aux réseaux mobile, permettant notamment de contenir et d'exécuter une application SIM (pour Subscriber Identity Module - module d'identification abonné) ou USIM (Universal Subscriber Identity Module), afin d'authentifier l'abonné sur les réseaux 2G/GSM ou 3G/UMTS. L'invention s'applique notamment mais pas seulement aux cartes mettant en oeuvre 6 contacts..

Cette carte à puce comporte telle que définie par la norme ETSI huit contacts permettant à un dispositif électronique d'interagir avec les données stockées dans la puce électronique.

Parmi les huit contacts définis par la norme ETSI :
- Un premier contact est attribué à une alimentation de la puce électronique
- Un deuxième contact, distinct du premier contact, est attribué à une masse,
- Un troisième contact, distinct des premier et deuxième contacts, est attribué à une réinitialisation de la puce électronique
- Deux contacts (quatrième et cinquième contacts distincts des premier, deuxième et troisième contacts) sont attribués à une interface de communication selon la norme ISO,
- Deux contacts (sixième et septième contacts distincts des premier, deuxième, troisième, quatrième, et cinquième contacts) peuvent être attribués à une interface de communication selon la norme USB, et
- Un huitième contact, distinct des premier, deuxième, troisième, quatrième, cinquième, sixième et septième contacts, peut être attribué à une interface de communication selon la norme SWP.

Comme défini par la norme ETSI : La demande internationale WO0231761 et la demande de brevet européen EP 1484708 décrivent l'attribution de deux ensemble de contacts distincts pour, respectivement, les interface ISO et USB. La demande de brevet américain US 2010/108772 décrit non seulement l'attribution de deux ensemble de contacts distincts pour, respectivement, les interface ISO et USB mais aussi l'attribution d'un contact distincts de ces dux ensemble à une interface SWP. La demande internationale WO9949415 décrit l'attribution d'un premier ensemble de contacts à une interface ISO et suggère l'attribution de contacts distincts de ce premier ensemble à une interface non-ISO.

La demande de brevet allemand DE102006053789 décrit comment éviter des collisions avec un protocole de communication SWP, notamment du protocole de communication MMC en modifiant l'attribution des contacts pour le protocole de communication MMC afin de laisser libre le contact C6 attribué au protocole SWP. Ce changement d'attribution est commandé par un dispositif de contrôle de la carte pour attribuer un contact libre de la carte au protocole de communication MMC.

Aujourd'hui, il est envisagé de réaliser des puces électroniques disposant de seulement six contacts. Sur de telle puce six contacts, la norme ETSI ne peut aujourd'hui attribuer qu'une seule interface de communication nécessitant deux contacts, au maximum trois interfaces de communication nécessitant un seul contact ou deux interfaces de communications dont l'une nécessitant deux contacts et l'autre un seul contact. Par conséquent, la norme ETSI ne permet pas d'attribuer sur une puce électronique à six contacts les deux interfaces de communication ISO et USB.

Le document US RE40,378 propose une autre attribution de l'interface de communication USB en partant d'une puces électroniques 8 contacts ne mettant en oeuvre qu'une seule interface de communication selon la norme ISO et en attribuant :
- un des deux contacts de l'interface de communication de la norme ISO aussi à une interface de communication selon la norme USB,
- et un des contacts libre à l'interface de communication selon la norme USB, ce contact libre permettant en outre d'indiquer en fonction de son état si la puce électronique met en oeuvre l'interface de communication ISO ou l'interface de communication USB.

Ainsi, selon l'enseignement du document US RE40,378 une puce électronique huit contacts à laquelle sont attribuées les deux interfaces de communication ISO et USB comportent 6 contacts attribués et deux contacts libres pour d'autres attributions.

Par conséquent, une puce électronique à six contacts selon l'attribution des contacts par l'enseignement du document US RE40,378 pourrait disposer des deux interfaces de communication ISO et USB mais ne permettrait pas l'attribution d'une troisième interface notamment de l'interface selon la norme SWP.

Un des buts de la présente invention est de remédier à des inconvénients/insuffisances de l'état de la technique/ d'apporter des améliorations par rapport à l'état de la technique.

Un objet de l'invention est un module électronique de stockage comportant plusieurs contacts dont au moins un contact de réinitialisation, et au moins un premier ensemble de contacts constituant une première interface de communication entre le module électronique de stockage et un dispositif électronique comportant ledit module électronique de stockage étant implémentée sur la totalité des contacts du premier ensemble de contacts, caractérisé en ce qu' au moins une deuxième interface de communication est implémentée sur la totalité des mêmes contacts du premier ensemble de contacts, la première et la deuxième interface de communication étant implémentée alternativement sur la totalité des mêmes contacts du premier ensemble de contacts en fonction d'un état (Ei) du contact de réinitialisation permettant de commander une mise en oeuvre de la première ou deuxième interface de communication par ledit premier ensemble de contacts met en oeuvre à un instant donné.

Ainsi, un module électronique de stockage ayant un nombre de contacts prédéterminés permet de proposer un plus grand nombre d'interfaces de communication. Ou encore, l'invention permet de proposer un module électronique de stockage ayant un nombre de contacts réduits avec les mêmes interfaces de communication.

Avantageusement, ledit contact de réinitialisation déclenche une réinitialisation du contenu du module électronique de stockage lors d'un changement d'état dudit contact de réinitialisation.

Avantageusement, ledit contact de réinitialisation déclenche la mise d'une interface de communication prédéterminé par ledit premier ensemble de contacts en fonction de l'état dudit contact de réinitialisation. Ainsi, le module électronique de stockage utilise un contact en moins pour mettre en oeuvre un même nombre d'interface de communication.

Avantageusement, ledit module électronique de stockage comporte au moins un deuxième ensemble de contacts constituant une troisième interface de communication. Ainsi, le module électronique de stockage libère un contact pour mettre en oeuvre une interface de communication supplémentaire.

Avantageusement, ledit module électronique de stockage comporte six contacts dont :
- ledit premier ensemble de contacts - comportant deux contacts - constituant, dans sa totalité, une première interface de communication selon la norme ISO, et une deuxième interface de communications selon la norme USB,
- ledit contact de réinitialisation indiquant :
   ∘ dans un premier état que la totalité des contacts du premier ensemble de contacts met en oeuvre la première interface de communication selon la norme ISO,
   ∘ dans un deuxième état que la totalité des mêmes contacts du premier ensemble de contacts met en oeuvre la deuxième interface de communications selon la norme USB,
   ∘ lors d'un changement entre le premier et le deuxième état, une remise à l'état par défaut du module électronique de stockage (fonction de réinitialisation).

Avantageusement, un desdits six contacts constitue une troisième interface de communication selon la norme SWP.

Un objet de l'invention est encore un procédé d'attribution des contacts d'un module électronique de stockage comportant plusieurs contacts dont au moins un contact de réinitialisation, et au moins un premier ensemble de contacts, caractérisé en ce que ledit procédé d'attribution comporte l'attribution de la totalité des mêmes contacts du premier ensemble de contacts d'au moins une première interface de communication ou une deuxième interface de communication entre le module électronique de stockage et un dispositif électronique en fonction d'un état dudit contact de réinitialisation), l'attribution étant commandée par le contact de réinitialisation (C2/RST).

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'attribution d'une fonction à un contact d'un module électronique de stockage et étant conçus pour commander l'exécution des différentes étapes de ce procédé.

L'invention vise donc aussi un programme comprenant des instructions de code de programme pour l'exécution des étapes du procédé d'attribution tel que défini ci-dessus lorsque ledit programme est exécuté par un processeur.

Un objet de l'invention est aussi un procédé de mise en oeuvre d'une attribution des contacts d'un module électronique de stockage comportant plusieurs contacts dont au moins un contact de réinitialisation, et au moins un premier ensemble de contacts, caractérisé en ce que ledit procédé de mise en oeuvre d'une attribution comporte la mise en oeuvre, commandée en fonction de l'état courant dudit contact de réinitialisation, par de la totalité des mêmes contacts du premier ensemble de contacts d'une interface de communication parmi au moins une première interface de communication et une deuxième interface de communication entre le module électronique de stockage et un dispositif électronique attribuées audit premier ensemble de contacts.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie du module électronique de stockage et étant conçus pour commander l'exécution des différentes étapes de ce procédé.

L'invention vise donc aussi un programme comprenant des instructions de code de programme pour l'exécution des étapes du procédé de mise en oeuvre d'une attribution tel que défini ci-dessus lorsque ledit programme est exécuté par un processeur.

Ces programmes peuvent utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est en outre un dispositif électronique comportant des moyens de connexion d'au moins un module électronique de stockage, le moyens de connexion comportant plusieurs connecteurs permettant de connecter chacun un contact d'un module électronique de stockage, dont au moins un connecteur de réinitialisation, et au moins un premier ensemble de connecteurs, une première interface de communication entre le module électronique de stockage et le dispositif électronique, étant implémentée sur la totalité des connecteurs du premier ensemble de connecteurs, caractérisé en ce qu' au moins une deuxième interface de communication entre le module électronique de stockage et le dispositif électronique est implémentée sur la totalité des mêmes connecteurs du premier ensemble de connecteurs, la première et la deuxième interface de communication étant implémentée alternativement sur la totalité des mêmes connecteurs du premier ensemble de connecteurs en fonction d'un état du connecteur de réinitialisation des moyens de connexion de commander une mise en oeuvre de la première ou deuxième interface de communication par ledit premier ensemble de connecteurs.

Les caractéristiques et avantages de l'invention apparaîtront plus clairement à la lecture de la description, faite à titre d'exemple, et des figures s'y rapportant qui représentent :
- Figures 1 a et 1 b, un module électronique de stockage selon l'art antérieur, respectivement selon la norme ETSI actuelle et selon le document US RE40,378,
- Figures 2a et 2b, un module électronique de stockage selon l'invention, respectivement à huit et six contacts, auxquels sont attribués trois interfaces de communication selon les norme ISO, USB et SWP,
- Figure 3, un module électronique de stockage selon l'invention à au moins six contacts auxquels sont attribués au moins trois interfaces de communication,
- Figure 4, un procédé d'attribution selon l'invention,
- Figure 5, un procédé de mise en oeuvre d'une attribution selon l'invention.

Par module électronique de stockage est entendu tout type de dispositif de stockage comportant un nombre défini de moyens d'échanges avec au moins un dispositif électronique, chaque moyens d'échanges étant attribués à au moins une fonction prédéfinie lors de sa fabrication ou de sa reprogrammation. En particulier, un module électronique de stockage est une puce électronique telle que la puce électronique de la carte UICC.

Par contacts d'un module électronique de stockage sont entendus tous moyens d'échanges dudit module électronique de stockage avec au moins un dispositif électronique. En particulier, les éléments dudit module électronique de stockage permettant d'établir un contact physique avec un dispositif électronique afin de permettre la transmission d'un signal par lesdits contacts entre ledit module électronique de stockage et ledit dispositif électronique, ledit signal étant notamment une alimentation du module électronique de stockage ou transportant au moins une donnée utile.

Par dispositif électronique est entendu tout dispositif électronique pouvant comporter, au moins ponctuellement, un module électronique de stockage et mettre en oeuvre ledit module électronique de stockage lors de la mise en oeuvre d'au moins un procédé de traitement par ledit dispositif électronique. Notamment, le dispositif électronique est un téléphone mobile, un terminal de paiement, un ordinateur, etc. en particulier lors d'un procédé de communication et/ou d'un traitement local.

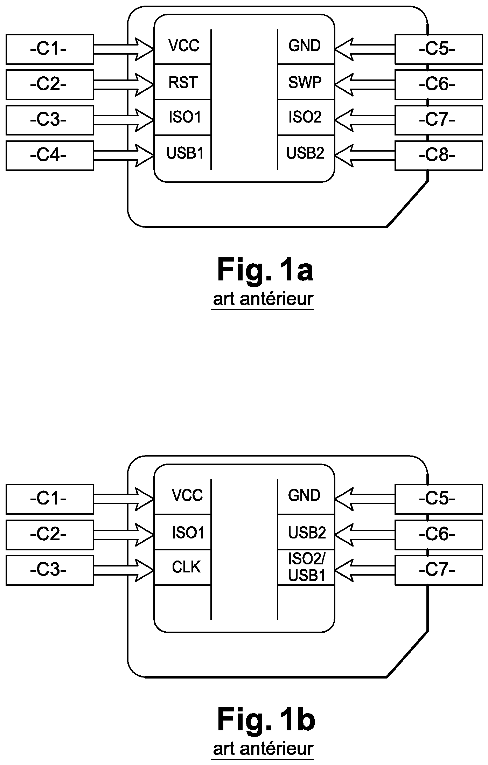

La figure 1a illustre un module électronique de stockage à huit contacts selon la norme ETSI actuelle.

Les huit contacts du module de stockage sont définies vis-à-vis d'un dispositif électronique, notamment du terminal mobile comme suit : Le contact C1 permet au terminal mobile (non illustré) d'alimenter (power en anglais) avec une tension *Vcc* le module électronique de stockage : celle-ci peut actuellement être en 1,8 volt, 3 volts ou 5 volts. Le contact C2 permet de réinitialiser (reset en anglais) RST le module électronique de stockage. Le contact C5 permet de fournir la masse (ground en anglais) GND de l'alimentation par le terminal mobile. Les contacts C3 et C7 constituent une première interface de communication ISO : le contact C3 fournissant l'horloge ISO1 de l'interface de communication ISO et le contact C3 permettant les entrées/sorties - I/O - de données ISO2 selon la norme ISO entre le module électronique de stockage et le terminal mobile. Les contacts C4 et C8 constituent une deuxième interface de communication USB (Universal Serial Bus en anglais ou bus série universel): les contacts C4 et C8, aussi nommés respectivement D+ et D-, permettant la transmission sur une paire différentielle (USB1, USB2) des données entre le module électronique de stockage et le terminal mobile. Le contact C6 constitue une troisième interface de communication SWP (pour Single Wire Protocol en anglais ou protocole monofil) : il s'agit d'une interface de communication utilisé pour les protocoles sans contact.

La figure 1b illustre un module électronique de stockage selon le document US RE40,378.

Les huit contacts du module de stockage sont définies vis-à-vis d'un dispositif électronique, notamment du terminal mobile comme suit : Le contact C1 permet au terminal mobile (non illustré) d'alimenter (power en anglais) avec une tension *Vcc* le module électronique de stockage : celle-ci peut actuellement être en 1,8 volt, 3 volts ou 5 volts. Le contact C2 permet de réinitialiser (reset - RST - en anglais) le module électronique de stockage. Le contact C5 permet de fournir la masse (ground - GND - en anglais) de l'alimentation par le terminal mobile. Les contacts C3 et C7 constituent une première interface de communication ISO : le contact C3 fournissant l'horloge ISO1 de l'interface de communication ISO et le contact C3 permettant les entrées/sorties - I/O - de données ISO2 selon la norme ISO entre le module électronique de stockage et le terminal mobile. Les contacts C6 et C7 constituent une deuxième interface de communication USB (Universal Serial Bus en anglais ou bus série universel): les contact C6 et C7 permettant la transmission sur une paire différentielle (USB1, USB2) des données entre le module électronique de stockage et le terminal mobile. En outre, le contact C6 permet d'indiquer laquelle des première ou deuxième interfaces de communication, respectivement ISO ou USB, est mise en oeuvre par le contact C7.

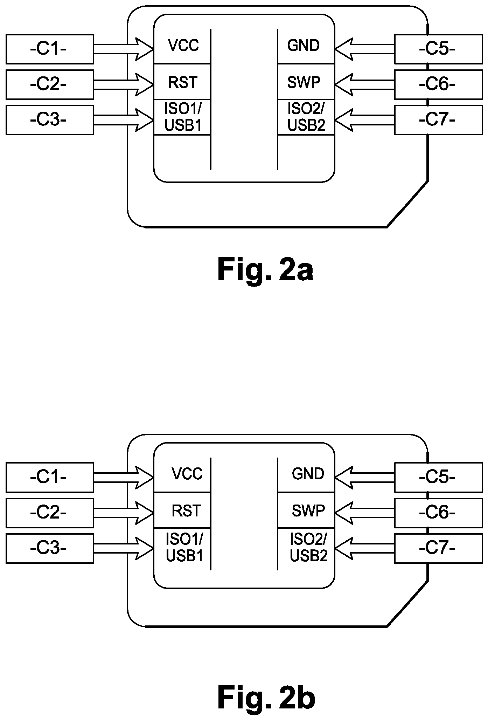

La figure 2a illustre un module électronique de stockage à huit contacts selon l'invention, auxquels sont attribués trois interfaces de communication selon les normes ISO, USB et SWP.

Les huit contacts du module de stockage sont définies vis-à-vis d'un dispositif électronique, notamment du terminal mobile comme suit : Le contact C1 permet au terminal mobile (non illustré) d'alimenter (power en anglais) avec une tension *Vcc* le module électronique de stockage : celle-ci peut actuellement être en 1,8 volt, 3 volts ou 5 volts. Le contact C5 permet de fournir la masse (ground en anglais) GND de l'alimentation par le terminal mobile.

Les interfaces de communications ISO et USB ayant la même fonction, elles sont utilisées de manière alternative. L'invention propose alors d'alterner aussi leur mise en oeuvre par le module électronique de stockage en proposant qu'un ensemble de contacts constitué par les contacts C3 et C7 constituent à la fois :
- une première interface de communication ISO : le contact C3 fournissant l'horloge ISO1 de l'interface de communication ISO et le contact C7 permettant les entrées/sorties de données ISO2 selon la norme ISO entre le module électronique de stockage et le terminal mobile, et
- une deuxième interface de communication USB (Universal Serial Bus en anglais ou bus série universel): les contacts C3 et C7, aussi nommés respectivement D+ et D-, permettant la transmission sur d'une paire différentielle (USB1, USB2) des données entre le module électronique de stockage et le terminal mobile.

Le contact C2 permet de réinitialiser (reset en anglais) RST le module électronique de stockage, et d'indiquer laquelle des première ou deuxième interfaces de communication, respectivement ISO ou USB, est mise en oeuvre par l'ensemble de contacts formés par C3 et C7. Le contact C6 constitue une troisième interface de communication SWP (pour Single Wire Protocol en anglais ou protocole monofil) : il s'agit d'une interface de communication utilisé pour les protocoles sans contact.

Ainsi, deux contacts restent libres sur le module électronique de stockage à huit contacts pour d'éventuelle(s) interface(s) de communication supplémentaire(s) nécessitant un ou deux contacts.

La figure 2b illustre un module électronique de stockage à six contacts selon l'invention, auxquels sont attribués trois interfaces de communication selon les normes ISO, USB et SWP.

Les six contacts du module de stockage sont définies vis-à-vis d'un dispositif électronique, notamment du terminal mobile comme suit : Le contact C1 permet au terminal mobile (non illustré) d'alimenter (power en anglais) avec une tension *Vcc* le module électronique de stockage : celle-ci peut actuellement être en 1,8 volt, 3 volts ou 5 volts. Le contact C5 permet de fournir la masse (ground en anglais) GND de l'alimentation par le terminal mobile. L'ensemble de contacts constitué par les contacts C3 et C7 constituent à la fois :
- une première interface de communication ISO : le contact C3 fournissant l'horloge ISO1 de l'interface de communication ISO et le contact C7 permettant les entrées/sorties de données ISO2 selon la norme ISO entre le module électronique de stockage et le terminal mobile, et
- une deuxième interface de communication USB (Universal Serial Bus en anglais ou bus série universel): les contacts C3 et C7, aussi nommés respectivement D+ et D-, permettant la transmission sur d'une paire différentielle (USB1, USB2) des données entre le module électronique de stockage et le terminal mobile.

Le contact C2 permet de réinitialiser (reset en anglais) RST le module électronique de stockage, et d'indiquer laquelle des première ou deuxième interfaces de communication, respectivement ISO ou USB, est mise en oeuvre par l'ensemble de contacts formés par C3 et C7. Le contact C6 constitue une troisième interface de communication SWP (pour Single Wire Protocol en anglais ou protocole monofil) : il s'agit d'une interface de communication utilisé pour les protocoles sans contact.

Ainsi, le module électronique de stockage à six contacts supportent les trois interfaces de communication aujourd'hui utilisées par le terminaux mobiles : ISO, USB et SWP.

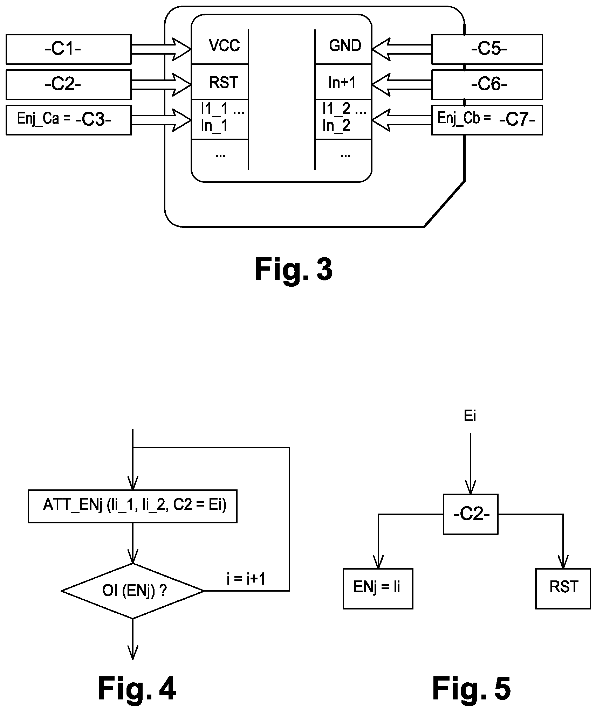

La figure 3 illustre un module électronique de stockage selon l'invention à au moins six contacts auxquels sont attribués au moins trois interfaces de communication.

Des contacts du module de stockage sont définis vis-à-vis d'un dispositif électronique, notamment du terminal mobile comme suit : Le contact C1 permet au terminal mobile (non illustré) d'alimenter (power en anglais) avec une tension *Vcc* le module électronique de stockage : celle-ci peut actuellement être en 1,8 volt, 3 volts ou 5 volts. Le contact C5 permet de fournir la masse (ground en anglais) GND de l'alimentation par le terminal mobile.

L'invention propose alors d'alterner plusieurs interfaces de communications I1,..., In utilisées de manière alternative dans leur mise en oeuvre par le module électronique de stockage en proposant qu'au moins un premier ensemble de contacts EN1 constitué par les contacts C3 et C7 constituent à la fois :
- une première interface de communication I1: le contact C3 fournissant le premier contact I1_1 de cette première interface I1 et le contact C7 fournissant le deuxième contact I1_2 de cette première interface 11,
- une nième interface de communication In: le contact C3 fournissant le premier contact In_1 de cette nième interface de communication In et le contact C7 fournissant le deuxième contact In_2 de cette nième interface de communication In,

Le contact C2 permet de réinitialiser (reset en anglais) RST le module électronique de stockage, et d'indiquer laquelle des première ... nième interfaces de communication est mise en oeuvre par ce premier ensemble de contacts formés par C3 et C7.

Dans le cas particulier de n=2, c'est-à-dire une première interface et une deuxième interface attribuées à ce premier ensemble de contacts EN1, le contact C2 dans un état 0 commandera la mise en oeuvre de la première interface I1 sur cet ensemble de contacts EN1, et dans un état 1 la mise en oeuvre de la deuxième interface I2 sur cet ensemble de contacts EN1.

Dans le cas particulier de n=3, c'est à dire une première interface I1, une deuxième interface I2, une troisième interface I3 attribuées au premier ensemble de contacts EN1, le contact C2 dans un état 00 (0 volts) commandera la mise en oeuvre de la première interface I1 sur cet ensemble de contacts EN1, dans un état 01 (1.8 Volts par exemple) la mise en oeuvre de la deuxième interface I2 sur cet ensemble de contacts EN1, et dans un état 11 (3 Volts par exemple) la mise en oeuvre de la troisième interface 13 sur cet ensemble de contacts EN1. Une autre solution est d'établir un protocole d'échange sur le contact C2, protocole permettant d'établir l'interface I1, I2 ou I3 activée en fonction des variations binaires envoyées sur le contact C2. Une implémentation possible dans le cas où 3 interfaces sont sélectionnables serait d'établir le code de sélection d'interface ainsi :

| premier état du contact C2 | deuxième état du contact C2 | interface sélectionnée sur C3 et C7 |
|---|---|---|
| 0 | 0 | I1_1 et I1_2 |
| 0 | 1 | I2_1 et I2_2 |
| 1 | 0 | I3_1 et I3_2 |

Ce protocole peut être généralisé à plus de 2 puissance n interfaces sélectionnables, *n* étant de nombre d'état à envoyer sur l'interface C2 afin de sélectionne la bonne interface sur les contacts C3 et C7.

Le contact C6 constitue au moins une n+1ième interface de communication SWP (pour Single Wire Protocol en anglais ou protocole monofil) : il s'agit d'une interface de communication utilisé pour les protocoles sans contact.

La figure 4 illustre un procédé d'attribution selon l'invention.

Le procédé d'attribution comporte l'attribution à un ensemble de contacts d'un module électronique de stockage ATT_ENj d'au moins une première interface de communication I1(i=1) et une deuxième interface de communication I2 (i=2) entre le module électronique de stockage et un dispositif électronique en fonction d'un état d'un contact de réinitialisation C2 dudit module électronique de stockage.

Notamment, le procédé d'attribution comporte l'attribution ATT_ENj à un ensemble j de contacts, d'une première interface 11, composé de deux contacts I1_1, I1_2 en y associant un état Ei pour le contact de réinitialisation C2. Le procédé d'attribution vérifie OI(ENj) ? si une interface supplémentaire doit être attribuée à cet ensemble de contacts ENj, si oui le procédé d'attribution comporte l'attribution ATT_ENj à un ensemble j de contacts, d'une deuxième interface 12, composée de deux contacts I2_1, I2_2 en y associant un état Ei pour le contact de réinitialisation C2. Le procédé d'attribution vérifie OI(ENj) ? si une interface supplémentaire doit être attribuée à cet ensemble de contacts ENj, si oui, le procédé d'attribution est poursuivi sur l'ensemble de contacts ENj, si non le procédé d'attribution est éventuellement poursuivi sur un autre ensemble de contacts ENj+1 comportant un ou plusieurs contacts.

La figure 5 illustre un procédé de mise en oeuvre d'une attribution selon l'invention.

Le module électronique de stockage reçoit sur son contact de réinitialisation C2 une information correspondant au basculement du contact C2 dans un état Ei. Le module électronique de stockage est alors réinitialisé en raison du changement d'état du contact C2, puis les contacts d'au moins un ensemble de contacts ENj (tel qu'illustré par la figure 5) commandé par le nouvel état Ei du contact C2 mettent en oeuvre l'interface li associé à cet état Ei.

Ainsi, le terminal mobile pourra échanger avec le module électronique de stockage via l'interface li mis en oeuvre pas les contacts de l'ensemble de contacts ENj.

Un dispositif électronique (non illustré) comporte au moins des moyens de connexion d'au moins un module électronique de stockage. Les moyens de connexion comportent plusieurs connecteurs permettant de connecter chacun un contact d'un module électronique de stockage, dont au moins un connecteur de réinitialisation, et au moins un premier ensemble de connecteurs constituant une première interface de communication entre le module électronique de stockage et le dispositif électronique. Le premier ensemble de connecteurs constitue au moins une deuxième interface de communication entre le module électronique de stockage et le dispositif électronique, les moyens de connexion permettant d'indiquer sur le connecteur de réinitialisation laquelle des premières ou deuxième interface de communication ledit premier ensemble de contacts met en oeuvre à un instant donné.

L'invention permet ainsi d'envisager une réduction de la taille des cartes à puces actuellement utilisées en conservant une compatibilité avec l'ensemble des interfaces définies : ISO, USB, SWP. Cette réduction de taille permet notamment d'envisager des terminaux plus petits ou supportant des composants plus volumineux.

En outre, l'invention permet une réduction de coûts des cartes SIM - en demandant deux contacts de moins et en permettant un réduction du plastique utilisé -et des terminaux - en raison de la réduction de connecteurs, demandant deux contacts de moins sur le connecteur pour la carte SIM.

L'invention vise aussi un support. Le support d'informations peut être n'importe quelle entité ou dispositif capable de stocker au moins l'un des programmes. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme de mise en oeuvre d'une attribution selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Module électronique de stockage comportant plusieurs contacts (C1, C2, C3, C4, C5, C6, C7, C8, Enj_Ca,Enj_Cb) dont :
• au moins un contact de réinitialisation (C2), et
• au moins un premier ensemble de contacts ((C3,C7), (Enj_Ca,Enj_Cb), ENj), une première interface de communication ((ISO1,ISO2),(I1_1,I1_2), (Ii_1, Ii_2, i=1)) entre le module électronique de stockage et un dispositif électronique comportant ledit module électronique de stockage étant implémentée sur la totalité des contacts du premier ensemble de contacts((C3,C7), (Enj_Ca,Enj_Cb), ENj),
**caractérisé en ce qu'**au moins une deuxième interface de communication ((USB1,USB2),(In_1,In_2),(Ii_1, Ii_2, i=2)) est implémentée sur la totalité des mêmes contacts du premier ensemble de contacts ((C3,C7), (Enj_Ca,Enj_Cb), ENj), la première et la deuxième interface de communication étant implémentée alternativement sur la totalité des mêmes contacts (C3, ENj_Ca) du premier ensemble de contacts en fonction d'un état (Ei) du contact de réinitialisation (C2) permettant de commander une mise en oeuvre de la première ou deuxième interface de communication par ledit premier ensemble de contacts ((C3,C7), (Enj_Ca,Enj_Cb), ENj).

2. Module électronique de stockage selon la revendication précédente, **caractérisé en ce que** ledit contact de réinitialisation (C2) déclenche une réinitialisation du contenu du module électronique de stockage lors d'un changement d'état dudit contact de réinitialisation (C2).

3. Module électronique de stockage selon l'une quelconque des revendications précédentes, **caractérisé en ce que** ledit module électronique de stockage comporte au moins un deuxième ensemble de contacts (C6,C4,C8) constituant une troisième interface de communication (SWP).

4. Module électronique de stockage selon l'une quelconque des revendications précédentes, **caractérisé en ce que** ledit module électronique de stockage comporte six contacts (C1,C2,C3,C4,C5,C6) dont :
• Ledit premier ensemble de contacts ((C3,C7), (Enj_Ca,Enj_Cb), ENj) constituant, dans sa totalité, une première interface de communication selon la norme ISO (ISO1,ISO2) et une deuxième interface de communications selon la norme USB (USB1,USB2),
• Ledit contact de réinitialisation (C2) indiquant :
- dans un premier état que la totalité des contacts du premier ensemble de contacts ((C3,C7), (Enj_Ca,Enj_Cb), ENj) met en oeuvre la première interface de communication selon la norme ISO (ISO1,ISO2),
- dans un deuxième état que la totalité des mêmes contacts du premier ensemble de contacts ((C3,C7), (Enj_Ca,Enj_Cb), ENj) met en oeuvre la deuxième interface de communications selon la norme USB (USB1,USB2),
- lors d'un changement entre le premier et le deuxième état, une remise à l'état par défaut du module électronique de stockage.

5. Module électronique de stockage selon la revendication précédente, **caractérisé en ce qu'**un desdits six contacts (C1,C2,C3,C4,C5,C6) constitue une troisième interface de communication selon la norme SWP (SWP).

6. Procédé d'attribution des contacts d'un module électronique de stockage comportant plusieurs contacts (C1,C2,C3,C4,C5,C6,C7,C8, Enj_Ca,Enj_Cb) dont au moins un contact de réinitialisation (C2), et au moins un premier ensemble de contacts ((C3,C7), (Enj_Ca, Enj_Cb), ENj), **caractérisé en ce que** ledit procédé d'attribution ATT_ENj comporte l'attribution de la totalité des mêmes contacts du premier ensemble de contacts ((C3,C7), (Enj_Ca,Enj_Cb),ENj) d'au moins une première interface de communication ((ISO1,ISO2),(I1_1,I1_2),(Ii_1, Ii_2, i=1)) ou une deuxième interface de communication ((USB1,USB2),(In_1,In_2),(Ii_1, Ii_2, i=2)) entre le module électronique de stockage et un dispositif électronique en fonction d'un état (Ei) dudit contact de réinitialisation (C2), l'attribution étant commandée par le contact de réinitialisation (C2).

7. Programme comprenant des instructions de code de programme pour l'exécution des étapes du procédé d'attribution selon la revendication précédente lorsque ledit programme est exécuté par un processeur.

8. Procédé de mise en oeuvre d'une attribution des contacts d'un module électronique de stockage comportant plusieurs contacts (C1,C2,C3,C4,C5,C6,C7,C8, Enj_Ca,Enj_Cb) dont au moins un contact de réinitialisation(C2), et au moins un premier ensemble de contacts ((C3,C7), (Enj_Ca,Enj_Cb), ENj), **caractérisé en ce que** ledit procédé de mise en oeuvre d'une attribution comporte la mise en oeuvre, commandée en fonction de l'état courant (Ei) dudit contact de réinitialisation (C2), par la totalité des mêmes contacts du premier ensemble de contacts ((C3,C7), (Enj_Ca,Enj_Cb), ENj) d'une interface de communication (ENj=li) parmi au moins une première interface de communication et une deuxième interface de communication (i=1,2) entre le module électronique de stockage et un dispositif électronique attribuées audit premier ensemble de contacts ((C3,C7), (Enj_Ca,Enj_Cb), ENj).

9. Programme comprenant des instructions de code de programme pour l'exécution des étapes du procédé de mise en oeuvre d'une attribution selon la revendication précédente lorsque ledit programme est exécuté par un processeur.

10. Dispositif électronique comportant des moyens de connexion d'au moins un module électronique de stockage, les moyens de connexion comportant plusieurs connecteurs permettant de connecter chacun un contact (C1,C2,C3,C4,C5,C5,C6,C7,C8, Enj_Ca,Enj_Cb) d'un module électronique de stockage, dont au moins un connecteur de réinitialisation, et au moins un premier ensemble de connecteurs, une première interface de communication entre le module électronique de stockage et le dispositif électronique étant implémentée sur la totalité des connecteurs du premier ensemble de connecteurs, **caractérisé en ce qu'** au moins une deuxième interface de communication entre le module électronique de stockage et le dispositif électronique est implémentée sur la totalité des mêmes connecteurs du premier ensemble de connecteurs, la première et la deuxième interface de communication étant implémentée alternativement sur la totalité des mêmes connecteurs du premier ensemble de connecteurs en fonction d'un état du connecteur de réinitialisation des moyens de connexion de commander une mise en oeuvre de la première ou deuxième interface de communication par ledit premier ensemble de connecteurs.

## Patentansprüche

1. Elektronisches Speichermodul, umfassend mehrere Kontakte (C1, C2, C3, C4, C5, C6, C7, C8, Enj_Ca, Enj_Cb), darunter:
• mindestens einen Rücksetzkontakt (C2) und
• mindestens einen ersten Satz von Kontakten ((C3,C7), (Enj_Ca, Enj_Cb), ENj), eine erste Kommunikationsschnittstelle ((ISO1, ISO2), (I1_1,I1_2), (Ii_1, Ii_2, i=1)) zwischen dem elektronischen Speichermodul und einer elektronischen Vorrichtung, die das erste elektronische Speichermodul aufweist, die auf der Gesamtheit der Kontakte des ersten Satzes von Kontakten ((C3,C7), (Enj_Ca, Enj_Cb), ENj) implementiert ist,
**dadurch gekennzeichnet, dass** mindestens eine zweite Kommunikationsschnittstelle ((USB1, USB2), (In_1, In_2), (Ii_1, Ii_2, i = 2)) auf der Gesamtheit der gleichen Kontakte des ersten Satzes von Kontakten ((C3, C7), (Enj_Ca, Enj_Cb), ENj) implementiert ist, wobei die erste und die zweite Kommunikationsschnittstelle abwechselnd auf der Gesamtheit der gleichen Kontakte (C3, ENj_Ca) des ersten Satzes von Kontakten in Abhängigkeit von einem Zustand (Ei) des Rücksetzkontaktes (C2) implementiert sind, der ermöglicht, eine Implementierung der ersten oder zweiten Kommunikationsschnittstelle durch den ersten Satz von Kontakten ((C3, C7), (Enj_Ca, Enj_Cb), ENj) zu steuern.

2. Elektronisches Speichermodul nach dem vorhergehenden Anspruch, **dadurch gekennzeichnet, dass** der Rücksetzkontakt (C2) eine Rücksetzung des Inhalts des elektronischen Speichermoduls bei einer Zustandsänderung des Rücksetzkontaktes (C2) auslöst.

3. Elektronisches Speichermodul nach einem der vorhergehenden Ansprüche, **dadurch gekennzeichnet, dass** das elektronische Speichermodul mindestens einen zweiten Satz von Kontakten (C6, C4, C8) aufweist, der eine dritte Kommunikationsschnittstelle (SWP) bildet.

4. Elektronisches Speichermodul nach einem der vorhergehenden Ansprüche, **dadurch gekennzeichnet, dass** das elektronische Speichermodul sechs Kontakte (C1, C2, C3, C4, C5, C6) aufweist, darunter:
• den ersten Satz von Kontakten ((C3, C7), (Enj_Ca, Enj_Cb), ENj), der in seiner Gesamtheit eine erste Kommunikationsschnittstelle nach der Norm ISO (ISO1, ISO2) und eine zweite Kommunikationsschnittstelle nach der Norm USB (USB1, USB2) bildet,
• wobei der Rücksetzkontakt (C2) Folgendes anzeigt:
- in einem ersten Zustand, dass die Gesamtheit der Kontakte des ersten Satzes von Kontakten ((C3,C7), (Enj_Ca, Enj_Cb), ENj) die erste Kommunikationsschnittstelle nach der Norm ISO (ISO1, ISO2) implementiert,
- in einem zweiten Zustand, dass die Gesamtheit der gleichen Kontakte des ersten Satzes von Kontakten ((C3,C7), (Enj_Ca, Enj_Cb), ENj) die zweite Kommunikationsschnittstelle nach der Norm USB (USB1, USB2) implementiert,
- bei einer Änderung zwischen dem ersten und dem zweiten Zustand ein Rückstellen in den Standardzustand des elektronischen Speichermoduls.

5. Elektronisches Speichermodul nach dem vorhergehenden Anspruch, **dadurch gekennzeichnet, dass** einer der sechs Kontakte (C1, C2, C3, C4, C5, C6) eine dritte Kommunikationsschnittstelle nach der Norm SWP (SWP) bildet.

6. Verfahren zur Zuweisung von Kontakten eines elektronischen Speichermoduls, umfassend mehrere Kontakte (C1, C2, C3, C4, C5, C6, C7, C8, Enj_Ca, Enj_Cb), darunter mindestens einen Rücksetzkontakt (C2) und mindestens einen ersten Satz von Kontakten ((C3, C7), (Enj_Ca, Enj_Cb), ENj), **dadurch gekennzeichnet, dass** das Verfahren zur Zuweisung ATT_ENj das Zuweisen der Gesamtheit der gleichen Kontakte des ersten Satzes von Kontakten ((C3, C7), (Enj_Ca, Enj_Cb), ENj) von mindestens einer ersten Kommunikationsschnittstelle ((ISO1, ISO2), (I1_1,I1_2), (Ii_1, Ii_2, i=1)) oder einer zweiten Kommunikationsschnittstelle ((USB1, USB2), (In_1, In_2), (Ii_1, Ii_2, i = 2)) zwischen dem elektronischen Speichermodul und einer elektronischen Vorrichtung in Abhängigkeit von einem Zustand (Ei) des Rücksetzkontaktes (C2) aufweist, wobei das Zuweisen durch den Rücksetzkontakt (C2) gesteuert wird.

7. Programm, umfassend Programmcodebefehle für die Ausführung der Schritte des Verfahrens zur Zuweisung nach dem vorhergehenden Anspruch, wenn das Programm von einem Prozessor ausgeführt wird.

8. Verfahren zur Ausführung einer Zuweisung der Kontakte eines elektronischen Speichermoduls, umfassend mehrere Kontakte (C1, C2, C3, C4, C5, C6, C7, C8, Enj_Ca, Enj_Cb), darunter mindestens einen Rücksetzkontakt (C2) und mindestens einen ersten Satz von Kontakten ((C3, C7), (Enj_Ca, Enj_Cb), ENj), **dadurch gekennzeichnet, dass** das Verfahren zur Ausführung einer Zuweisung die Implementierung, die in Abhängigkeit von dem aktuellen Zustand (Ei) des Rücksetzkontaktes (C2) gesteuert wird, durch die Gesamtheit der gleichen Kontakte des ersten Satzes von Kontakten ((C3, C7), (Enj_Ca, Enj_Cb), ENj) einer Kommunikationsschnittstelle (ENj=Ii) unter mindestens einer ersten Kommunikationsschnittstelle und einer zweiten Kommunikationsschnittstelle (i=1, 2) zwischen dem elektronischen Speichermodul und einer elektronischen Vorrichtung, die dem ersten Satz von Kontakten ((C3, C7), (Enj_Ca, Enj_Cb), ENj) zugewiesen werden, aufweist.

9. Programm, umfassend Programmcodebefehle für die Ausführung der Schritte des Verfahrens zur Ausführung einer Zuweisung nach dem vorhergehenden Anspruch, wenn das Programm von einem Prozessor ausgeführt wird.

10. Elektronische Vorrichtung, umfassend Mittel zum Anschließen von mindestens einem elektronischen Speichermodul, wobei die Mittel zum Anschließen mehrere Steckverbinder aufweisen, die jeweils ermöglichen, einen Kontakt (C1, C2, C3, C4, C5, C5, C6, C7, C8, Enj_Ca, Enj_Cb) eines elektronischen Speichermoduls anzuschließen, darunter mindestens einen Rücksetzsteckverbinder und mindestens einen ersten Satz von Steckverbindern, wobei eine erste Kommunikationsschnittstelle zwischen dem elektronischen Speichermodul und der elektronischen Vorrichtung auf der Gesamtheit der Steckverbinder des ersten Satzes von Steckverbindern implementiert ist, **dadurch gekennzeichnet, dass** mindestens eine zweite Kommunikationsschnittstelle zwischen dem elektronischen Speichermodul und der elektronischen Vorrichtung auf der Gesamtheit der gleichen Steckverbinder des ersten Satzes von Steckverbindern implementiert ist, wobei die erste und die zweite Kommunikationsschnittstelle abwechselnd auf der Gesamtheit der gleichen Steckverbinder des ersten Satzes von Steckverbindern in Abhängigkeit von einem Zustand des Rücksetzsteckverbinders der Mittel zum Anschließen zum Steuern einer Implementierung der ersten oder zweiten Kommunikationsschnittstelle durch den ersten Satz von Steckverbindern implementiert sind.

## Claims

1. Electronic storage module having a plurality of contacts (C1, C2, C3, C4, C5, C6, C7, C8, Enj_Ca, Enj_Cb), including
• at least one reinitialization contact (C2), and
• at least one first set of contacts ((C3, C7), (Enj_Ca, Enj_Cb), ENj), a first communication interface ((ISO1, ISO2), (I1_1, I1_2), (Ii_1, li_2, i=1)) between the electronic storage module and an electronic device having said electronic storage module being implemented on all the contacts of the first set of contacts ((C3, C7), (Enj_Ca, Enj_Cb), ENj),
**characterized in that** at least one second communication interface ((USB1, USB2), (In_1, In_2), (Ii_1, Ii_2, i=2)) is implemented on all of the same contacts of the first set of contacts ((C3, C7), (Enj_Ca, Enj_Cb), ENj), the first and second communication interfaces being implemented alternatively on all of the same contacts (C3, ENj_Ca) of the first set of contacts depending on a state (Ei) of the reinitialization contact (C2) allowing control of an implementation of the first or second communication interface by said first set of contacts ((C3, C7), (Enj_Ca, Enj_Cb), ENj).

2. Electronic storage module according to the preceding claim, **characterized in that** said reinitialization contact (C2) triggers reinitialization of the content of the electronic storage module upon a change of state of said reinitialization contact (C2).

3. Electronic storage module according to either of the preceding claims, **characterized in that** said electronic storage module has at least one second set of contacts (C6, C4, C8) constituting a third communication interface (SWP).

4. Electronic storage module according to any one of the preceding claims, **characterized in that** said electronic storage module has six contacts (C1, C2, C3 C4, C5, C6), including:
• said first set of contacts ((C3, C7), (Enj_Ca, Enj_Cb), ENj) constituting in its entirety a first communication interface according to the ISO standard (ISO1, ISO2) and a second communication interface according to the USB standard (USB1, USB2),
• said reinitialization contact (C2) indicating:
- in a first state that all the contacts of the first set of contacts ((C3, C7), (Enj_Ca, Enj_Cb), ENj) implements the first communication interface according to the ISO standard (ISO1, ISO2),
- in a second state all of the same contacts of the first set of contacts ((C3, C7), (Enj_Ca, Enj_Cb), ENj) implements the second communication interface according to the USB standard (USB1, USB2),
- upon a change between the first and second states, a reset to the default state of the electronic storage module.

5. Electronic storage module according to the preceding claim, **characterized in that** one of said six contacts (C1, C2, C3, C4, C5, C6) constitutes a third communication interface according to the SWP standard (SWP).

6. Method for assigning the contacts of an electronic storage module having a plurality of contacts (C1, C2, C3, C4, C5, C6, C7, C8, Enj_Ca, Enj_Cb), including at least one reinitialization contact (C2), and at least one first set of contacts ((C3, C7), (Enj_Ca, Enj_Cb), ENj), **characterized in that** said assignment method ATT_ENj involves the assignment of all of the same contacts of the first set of contacts ((C3, C7), (Enj_Ca, Enj_Cb), ENj) of at least one first communication interface ((ISO1, ISO2), (I1_1, I1_2), (Ii_1, Ii_2, i=1)) or a second communication interface ((USB1, USB2), (In_1, In_2), (Ii_1, Ii_2, i=2)) between the electronic storage module and an electronic device depending on a state (Ei) of said reinitialization contact (C2), the assignment being controlled by the reinitialization contact (C2).

7. Program comprising program code instructions for the execution of the steps of the assignment method according to the preceding claim when said program is executed by a processor.

8. Method for implementing assignment of the contacts of an electronic storage module having a plurality of contacts (C1, C2, C3, C4, C5, C6, C7, C8, Enj_Ca, Enj_Cb), including at least one reinitialization contact (C2), and at least one first set of contacts ((C3, C7), (Enj_Ca, Enj_Cb), ENj), **characterized in that** said assignment implementation method involves the implementation, controlled depending on the current state (Ei) of said reinitialization contact (C2), by all of the same contacts of the first set of contacts ((C3, C7), (Enj_Ca, Enj_Cb), ENj) of a communication interface (ENj=li) among at least one first communication interface and a second communication interface (i=1,2) between the electronic storage module and an electronic device that are assigned to said first set of contacts ((C3, C7), (Enj_Ca, Enj_Cb), ENj).

9. Program comprising program code instructions for the execution of the steps of the assignment implementation method according to the preceding claim when said program is executed by a processor.

10. Electronic device having means for connecting at least one electronic storage module, the connection means having a plurality of connectors allowing each to connect a contact (C1, C2, C3, C4, C5, C5, C6, C7, C8, Enj_Ca, Enj_Cb) of an electronic storage module, including at least one reinitialization connector, and at least one first set of connectors, a first communication interface between the electronic storage module and the electronic device being implemented on all the connectors of the first set of connectors, **characterized in that** at least one second communication interface between the electronic storage module and the electronic device is implemented on all of the same connectors of the first set of connectors, the first and second communication interfaces being implemented alternatively on all of the same connectors of the first set of connectors depending on a state of the reinitialization connector of the connection means for controlling an implementation of the first or second communication interface by said first set of connectors.
